# EUROPÄISCHE PATENTANMELDUNG

(11) **EP 0 839 595 A1**
(43) Veröffentlichungstag der Anmeldung: **06.05.1998**
(21) Anmeldenummer: 97116050.2
(22) Anmeldetag: 16.09.1997
(51) Int. Cl.: B23K 20/02

(54) **Verfahren zur Herstellung innenplattierter Metallrohre**

(30) Priorität: 30.10.1996 DE 19644999
(71) Anmelder: Wilhelm Schulz GmbH, 47809 Krefeld (DE)
(72) Erfinder: Schulz,Wolfgang, 47800 Krefeld (DE); Worringer,Josef, 47906 Kempen (DE); Osborn,Donald, E.Amherst, N.Y.14051 (US)
(74) Vertreter: Cohausz & Florack

(57) **Zusammenfassung**

Die Erfindung betrifft ein Verfahren zur Herstellung innenplattierter Metallrohre. Durch Aufweiten und Stauchen eines die spätere Innenplattierung bildenden Rohrstücks, das paßgenau in eine Rohrluppe eingesetzt ist, wird ein Rohrverbund erzeugt, der nach dem Erhitzen auf Formgebungstemperatur stranggepreßt wird.

## Beschreibung

Die Erfindung betrifft ein Verfahren zur Herstellung innenplattierter Metallrohre.

Für die Herstellung plattierter Metallrohre sind mehrere Herstellungsverfahren bekannt:
1. **Walzplattier-Schweißen**
   Walzplattierte Metallbleche werden zu einem Rohr gebogen und längsnahtverschweißt.
2. **Schleuderguß**
   In ein um seine Achse drehbar gelagertes Metallrohr wird eine flüssige Metallschmelze eingegossen, durch Drehen des Rohres verteilt sich die Metallschmelze gleichmäßig über die Länge und den Umfang des äußeren Rohres.
3. **Innendruckplattieren**
   In ein äußeres Metallrohr wird ein inneres dünnwandigeres die Innenplattierung bildendes Rohr paßgenau eingesetzt und durch Erzeugung eines Innendrucks an die Innenumfangsfläche des Außenrohres angepreßt, DE 44 06 188 C1.
4. **Extrudieren**
   In ein Metallrohr wird ein die spätere Plattierung bildendes metallisches Innenrohr eingeschoben, auf dessen Außenumfangsfläche eine niedrig schmelzende Legierung als Verbindungshilfsmittel (Lot) aufgetragen ist, dann wird der Zwischenraum zwischen beiden Rohren evakuiert, der Verbund auf etwa 1100 °C erhitzt, wobei die Verbindungsmetallegierung zwischen den beiden Rohren aufschmilzt. Anschließend wird der Rohrverbund zum fertigen Rohr stranggepreßt,
   US-PS 4 744 504.

In der Erkenntnis, daß das zuletzt genannte bekannte Verfahren gemäß US-PS 4 744 504 sehr aufwendig ist, indem jeweils eine Mehrzahl von Fertigungsschritten durchlaufen werden muß, was das Endprodukt verteuert, und deshalb gegenüber kompakten Rohren aus höherwertigen Werkstoffen nicht wettbewerbsfähig ist, liegt der vorliegenden Erfindung die Aufgabe zugrunde, das Herstellungsverfahren für innenplattierte Rohre zu vereinfachen, um damit das Endprodukt kostengünstiger und gegenüber Rohren aus höherwertigen Werkstoffen konkurrenzfähiger anbieten zu können. Das Ziel ist jeweils die Erzeugung von innenplattierten Rohren aus Metallen oder Metallegierungen, wobei auf der dem geförderten Produkt in der Rohrleitung zugewandten Seite die Innenplattierung aus höherwertigem, insbesondere korrosionsbeständigem Werkstoff, wie korrosionsbeständigem Edelstahl, und auf der rückwärtigen Seite das eigentliche Tragrohr aus geringwertigerem Werkstoff, wie Gußeisen oder Kohlenstoffstahl oder ähnlichem, vorgesehen sein soll. In der Regel ist die Innenplattierung einschichtig. Grundsätzlich ist es natürlich auch möglich, die Innenplattierung aus zwei oder mehr Schichten aufzubauen.

Zur Lösung der vorerwähnten Aufgabe wird erfindungsgemäß ein Verfahren zur Herstellung innenplattierter Metallrohre vorgeschlagen, welches durch die Kombination folgender Maßnahmen gekennzeichnet ist:
(a) in eine Rohrluppe mit im Verhältnis zum Endprodukt großer Wanddicke und kurzer Länge wird ein die spätere Plattierungsschicht bildendes Rohrstück, das die gleiche Länge hat wie die Rohrluppe und einen dem Innendurchmesser der Rohrluppe entsprechenden Außendurchmesser sowie eine im Verhältnis zur Wandstärke der Plattierungsschicht des fertigen Rohres größeren Wandstärke, paßgenau eingesetzt, nachdem die gegenüberliegenden Umfangsflächen der Rohrluppe und des Rohrstücks metallisch blank gemacht worden waren;
(b) das Rohrstück wird so unter Innendruck gesetzt, daß es sich unter Verdrängung der zwischen ihm und der Rohrluppe vorhandenen Luft satt an die Innenumfangsfläche der Rohrluppe anlegt, wobei das Rohrstück gleichzeitig in Achsrichtung gestaucht wird;
(c) der aus Rohrluppe mit eingeschrumpftem Rohrstück gebildete Rohrverbund wird auf Formgebungstemperatur erwärmt und dann in einem Zug auf die Endabmessung stranggepreßt.

Das erfindungsgemäße Verfahren löst die gestellte Aufgabe. Zur Vorbereitung des Rohrverbundes für die Erzeugung des innenplattierten Rohres durch das an sich bekannte Strangpressen genügt überraschenderweise ein einziger Arbeitsschritt, nämlich das unter Innendrucksetzen und gleichzeitige Stauchen des die spätere Innenplattierung bildenden Rohrstücks. Ohne weitere Maßnahme, wie das Aufbringen einer Lotschicht oder Evakuieren des Zwischenraums, wie es gemäß der US-PS 4 744 504 für erforderlich gehalten wurde, gelingt eine ausgezeichnete Verbindung zwischen beiden Rohren, die beim anschließenden Strangpressen zu einem echten Diffusionsverbund zwischen beiden Werkstoffen führt. Der auf einer hydraulischen Presse vorgenommene Verbund zwischen Innenplattierungsrohr und Rohrluppe ist auch erheblich einfacher und kostengünstiger durchzuführen als alle eingangs erwähnten bekannten Verfahren.

Das erfindungsgemäße Verfahren unterscheidet sich grundsätzlich von den bekannten Verfahren, bei denen die Plattierung erst am fertigen Rohr vorgenommen wird. Wie bei dem aus der US-PS 4 744 504 bekannten Verfahren erfolgt der Werkstoffverbund vor der Erzeugung des Rohres, allerdings wie gesagt auf wesentlich einfachere und damit kostengünstigere Weise.

Nach dem erfindungsgemäßen Verfahren kann eine nahtlose Rohrluppe mit einem nahtlosen Rohrstück verarbeitet werden. Es ist jedoch auch die Verwendung einer geschweißten Rohrluppe und eines geschweißten Rohrstücks möglich. Schließlich ist auch die Verwendung einer nahtlosen Rohrluppe mit einem geschweißten Rohrstück oder einer geschweißten Rohrluppe mit einem nahtlosen Rohrstück denkbar.

Bevorzugt wird die Verwendung einer Rohrluppe aus unlegiertem Stahl mit einem Rohrstück aus korrosionsbeständigem Edelstahl. Das Förderrohr kann aber auch aus jedem anderen metallischen Werkstoff und das Rohrstück aus anderem hochwertigen Metall oder einer Metallegierung sein.

Das Rohrstück wird bevorzugt mit Drücken bis 35.000 bar hydraulisch an die Rohrluppe angepreßt unter gleichzeitigem Stauchen in Achsrichtung. Die Höhe der jeweils aufzuwendenden Drücke für das Aufweiten und die Größe der Kräfte für das Stauchen des Rohrstücks hängen von den geometrischen Gegebenheiten, insbesondere von der Nennweite und Wandstärke, aber auch von der Werkstofffestigkeit ab.

Gemäß einer bevorzugten Ausgestaltung des erfindungsgemäßen Verfahrens wird der aus Rohrluppe mit eingeschrumpftem Rohrstück gebildete Rohrverbund nach dem Erwärmen auf eine Temperatur im Bereich von 1050 bis 1250 °C auf ein Vielfaches seiner Länge stranggepreßt.

Anhand der Zeichnung wird das erfindungsgemäße Verfahren näher beschrieben. Es zeigen:
- Fig 1: den Längsschnitt durch eine hydraulische Presse in der Stellung vor dem Einleiten des Preßdrucks und den Querschnitt längs der Linie A - B im Bildteil 1a;
- Fig. 2: den Längsschnitt der hydraulischen Presse im Betrieb;
- Fig. 3: den Längsschnitt der Strangpreßmatrize, den aus Rohrluppe und Rohrstück gebildeten Rohrverbund als Vormaterial für das anschließende Strangpressen und den Strangpreßstempel vor dem Einleiten des Strangpreßvorgangs;
- Fig. 4: den Längsschnitt der Strangpresse unmittelbar vor Beginn des Strangpressens;
- Fig. 5: die Strangpreßvorrichtung am Ende des Strangpreßvorgangs.

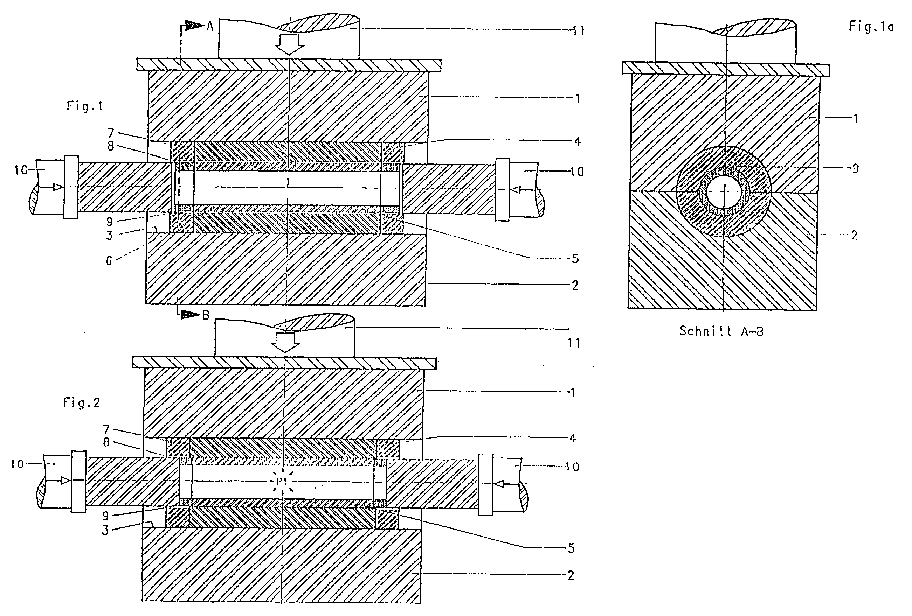

Die hydraulische Presse gemäß Fig. 1 besteht aus dem Werkzeugoberteil 1 und dem Werkzeugunterteil 2 mit der zylindrischen Aufnahme 3 für den aus Rohrluppe 4 und darin paßgenau eingesetztem Rohrstück 5 gebildeten Rohrverbund. Der Oberstempel 11 hält das Werkzeugoberteil 1 und das Werkzeugunterteil 2 geschlossen. Der Spalt 6 zwischen der Rohrluppe 4 und dem Rohrstück 5 ist der Deutlichkeit halber etwas übertrieben breit gezeichnet worden. Im Prinzip sitzt das Rohrstück 5 paßgenau in der Rohrluppe 4. Gegen die Enden des Rohrverbundes 4, 5 sind die Abdichtringe 7, 8 gesetzt. Zwischen den Abdichtringen 7, 8 sind axiale Durchgangsöffnungen 9 für das Entweichen von Luft aus dem Ringraum 6 gebildet.

Zum Einleiten des Preßvorgangs werden die Druckstempel 10 von beiden Seiten angestellt, wie aus Fig. 2 hervorgeht. In das Rohrstück 5 wird nun durch Bohrungen in einem oder beiden Druckstempeln 10 hydraulische Flüssigkeit eingeleitet und darin ein Innendruck P1 erzeugt.

Dieser Innendruck bewirkt ein gleichmäßiges Aufweiten des Rohrstücks 5 und Anlegen desselben an die Innenumfangsfläche der Rohrluppe 4. Dabei entweicht die in dem Spalt 6 befindliche Luft durch die axialen Durchgangsöffnungen 9. Gleichzeitig mit der Innendruck-Erzeugung wird das Rohrstück 5 von seinen Enden her mittels der Druckstempel 10 gestaucht, um den Aufweitvorgang zu unterstützen. Auf diese Weise wird zwischen der Rohrluppe 4 und dem Rohrstück 5 ein Preßverbund bewirkt.

### Beispiel

In eine Rohrluppe aus St 52, einem unlegierten Kohlenstoffstahl, von 1700 mm Länge und 560 mm Außendurchmesser und 93 mm Wandstärke wird ein Rohrstück aus dem korrosionsbeständigen Edelstahl AISI 316 L der gleichen Länge mit einem dem Innendurchmesser der Rohrluppe entsprechenden Außendurchmesser und einem Innendurchmesser von 336 mm paßgenau eingeschoben. Die Außenumfangsfläche des Rohrstücks 5 und die Innenumfangsfläche der Rohrluppe 4 sind spangebend bearbeitet, z.B. überdreht oder überschliffen, um Zunder zu entfernen und die Oberflächen zur Verbesserung der Diffusionsverbindung metallisch blank zu machen. Der Preßverbund wird unter einem hydraulischen Druck von 8.000 bar hergestellt. Die beim Preßvorgang verwendete hydraulische Flüssigkeit hat bei 1.000 bar eine Kompressibilität von etwa 5 % und bei 10000 bar eine Kompressibilität von etwa 20 %. Zu dem mit den Pressen gleichzeitigen Stauchen wird eine Horizontalkraft in Achsrichtung des Rohrstücks aufgewandt, die in der Rohrstückwandung einen oberhalb der Elastizitätsgrenze liegenden Spannungszustand bewirkt.

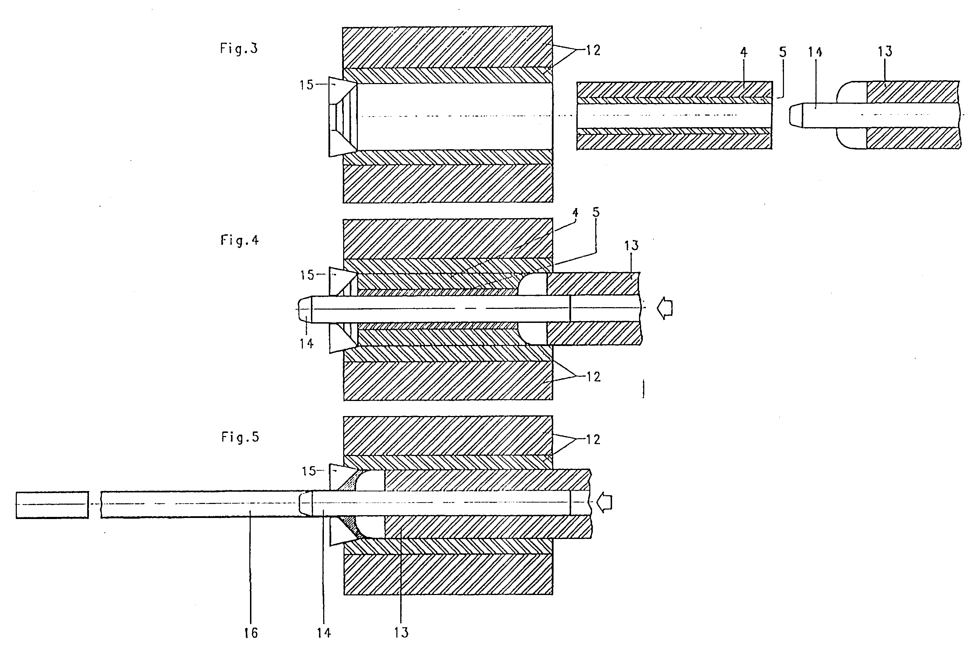

Der so vorbereitete Rohrverbund 4, 5 wird gemäß Fig. 3 und 4 in eine Strangpreßvorrichtung 12 überführt. Der Strangpreßstempel 13 enthält einen Dorn 14, der im Zusammenwirken mit der strangpreßdüse 15 den Querschnitt des stranggepreßten Rohrprofils 16 begrenzt.

Das stranggepreßte Rohrprofil hat beispielsweise einen Außendurchmesser von 355 mm, das äußere Rohr ist auf eine Wandstärke von 12,7 mm und das Innenrohr auf eine Wandstärke von 3 mm durch den Strangpreßvorgang reduziert worden. Das Rohr hat eine Länge von 15,6 m erreicht, entsprechend etwa dem Neunfachen der Ausgangslänge des Rohrverbundes.

Nach dem Herstellen der Preßverbindung zwischen Rohrluppe und Rohrstück wurde der Rohrverbund in einem gasbefeuerten Ofen auf etwa 870 °C vorerwärmt, elektroinduktiv auf die Strangpreßtemperatur von etwa 1.180 °C enderhitzt. Anschließend wurde der erhitzte Rohrverbund in die Strangpreßvorrichtung 12 eingebracht und in einem Zug stranggepreßt.

## Patentansprüche

1. Verfahren zur Herstellung innenplattierter Metallrohre, bestehend aus der Kombination folgender Maßnahmen:
(a) in eine Rohrluppe mit im Verhältnis zum Endprodukt großer Wanddicke und kurzer Länge wird ein die spätere Plattierungsschicht bildendes Rohrstück, das die gleiche Länge hat wie die Rohrluppe und einen dem Innendurchmesser der Rohrluppe entsprechenden Außendurchmesser sowie eine im Verhältnis zur Wandstärke der Plattierungsschicht des fertigen Rohres größeren Wandstärke, paßgenau eingesetzt, nachdem die gegenüberliegenden Umfangsflächen der Rohrluppe und des Rohrstücks metallisch blank gemacht worden waren;
(b) das Rohrstück wird so unter Innendruck gesetzt, daß es sich unter Verdrängung der zwischen ihm und der Rohrluppe vorhandenen Luft satt an die Innenumfangsfläche der Rohrluppe anlegt, wobei das Rohrstück gleichzeitig in Achsrichtung gestaucht wird;
(c) der aus Rohrluppe mit eingeschrumpftem Rohrstück gebildete Rohrverbund wird auf Formgebungstemperatur erwärmt und dann in einem Zug auf die Endabmessung stranggepreßt.

2. Verfahren nach Anspruch 1,
**dadurch gekennzeichnet**, daß das Rohrstück mit Drücken bis 35.000 bar hydraulisch an die Rohrluppe angepreßt und gleichzeitig gestaucht wird.

3. Verfahren nach Anspruch 1 oder 2,
**gekennzeichnet** durch die Verwendung einer nahtlosen Rohrluppe und eines nahtlosen Rohrstücks.

4. Verfahren nach Anspruch 1 oder 2,
**gekennzeichnet** durch die Verwendung einer geschweißten Rohrluppe und eines geschweißten Rohrstücks.

5. Verfahren nach Anspruch 1 oder 2,
**gekennzeichnet** durch die Verwendung einer nahtlosen Rohrluppe mit einem geschweißten Rohrstück oder einer geschweißten Rohrluppe mit einem nahtlosen Rohrstück.

6. Verfahren nach einem der vorhergehenden Ansprüche,
**gekennzeichnet** durch die Verwendung einer Rohrluppe aus unlegiertem Stahl mit einem Rohrstück aus korrosionsbeständigem Edelstahl.

7. Verfahren nach einem der Ansprüche 1 bis 6,
**dadurch gekennzeichnet**, daß der aus Rohrluppe mit eingeschrumpftem Rohrstück gebildete Rohrverbund nach dem Erwärmen auf eine Temperatur im Bereich von 1050 bis 1250 °C auf ein Vielfaches seiner Länge stranggepreßt wird.
